# EUROPEAN PATENT SPECIFICATION

(11) **EP 3 960 505 B1**
(45) Date of publication and mention of the grant of the patent: **04.10.2023**
(21) Application number: 21193131.6
(22) Date of filing: 25.08.2021
(51) Int. Cl.: B60C 11/24, B60C 23/04

(54) **TIRE WEAR STATE ESTIMATION SYSTEM AND METHOD**
SYSTEM UND METHODE ZUR REIFENVERSCHLEISSABSCHÄTZUNG
SYSTÈME ET PROCÉDÉ D'ESTIMATION DE L'ÉTAT D'USURE D'UN PNEU

(30) Priority: 26.08.2020 US 202063070506 P; 10.06.2021 US 202117343880
(43) Date of publication of application: 02.03.2022
(73) Proprietor: The Goodyear Tire & Rubber Company, Akron, OH 44316 (US)
(72) Inventor: SHARMA, Sparsh, L-1610 Luxembourg (LU); SINGH, Kanwar Bharat, L-7363 Lorentzweiler (LU); ARAT, Mustafa Ali, L-9031 Ettelbruck (LU); DERLUYN, Pieter-Jan, L-8285 Kehlen (LU)
(74) Representative: Kutsch, Bernd

(56) References cited:
- US-A1- 2017 113 494
- US-A1- 2017 113 495
- US-A1- 2019 001 757
- US-A1- 2019 270 347
- US-A1- 2020 070 589
- US-A1- 2020 231 010

## Description

### Field of the Invention

The invention relates generally to tire monitoring systems and methods. More particularly, the invention relates to systems and methods that predict tire wear. Specifically, the invention is directed to a system and method for estimating the wear state of a tire by employing sub-models and determining a comprehensive wear state from the estimates generated by each sub-model.

### Background of the Invention

Tire wear plays an important role in vehicle factors such as safety, reliability, and performance. Tread wear, which refers to the loss of material from the tread of the tire, directly affects such vehicle factors. As a result, it is desirable to monitor and/or measure the amount of tread wear experienced by a tire. For the purpose of convenience, the term "tread wear" may be used interchangeably herein with the term "tire wear".

One approach to the monitoring and/or measurement of tread wear has been through the use of wear sensors disposed in the tire tread, which has been referred to a direct method or approach. The direct approach to measuring tire wear from tire mounted sensors has multiple challenges. Placing the sensors in an uncured or "green" tire to then be cured at high temperatures may cause damage to the wear sensors. In addition, sensor durability can prove to be an issue in meeting the millions of cycles requirement for tires. Moreover, wear sensors in a direct measurement approach must be small enough not to cause any uniformity problems as the tire rotates at high speeds. Finally, wear sensors can be costly and add significantly to the cost of the tire.

Due to such challenges, alternative approaches have been developed, which involve prediction of tread wear over the life of the tire, including indirect estimates of the tire wear state. These alternative approaches have experienced certain disadvantages in the prior art due to a lack of optimum prediction techniques, which in turn reduces the accuracy and/or reliability of the tread wear predictions.

Prior art indirect estimates of tire wear include statistical models that are based on determinations of particular tire behavior and/or characteristics. For example, indirect wear estimates have been based on: the rolling radius of the tire; the slip of the tire; the frictional energy of the tire; vibration of the tire; cornering stiffness of the tire; braking stiffness of the tire; footprint length of the tire; and analysis of parameter combinations such as tire mileage, weather, and tire construction.

Each of these techniques provides a specific estimate of the tire wear state. However, the reliability of each technique may be affected by a change in external parameters, such as weather, vehicle location, road surface and road roughness, as well as tire physical parameters, such as tire temperature, vehicle load state, and the like. In addition, any one of these techniques may outperform other techniques by providing a more accurate and/or reliable estimate of tire wear based on the tire operating environment and accompanying changes in external and physical parameters. In the prior art, there has been no manner of combining or evaluating the results of each separate technique in real time to arrive at an optimum wear state estimate.

As a result, there is a need in the art for a comprehensive tire wear state estimation system that provides a more accurate and reliable estimate of tire wear state than prior art systems.

### Summary of the Invention

The invention relates to a system in accordance with claim 1 and to a method in accordance with claim 14.

Dependent claims refer to preferred embodiments of the invention.

According to an aspect of an exemplary embodiment of the invention, a tire wear state estimation system is provided. The system includes at least one tire that supports a vehicle. A sensor is mounted on the tire, and the tire mounted sensor measures tire parameters. At least one sensor is mounted on the vehicle, and the vehicle mounted sensor measures vehicle parameters. Each one of a plurality of sub-models receives selected tire parameters from the tire mounted sensor and selected vehicle parameters from the vehicle mounted sensor. Each one of the plurality of sub-models generates a respective sub-model wear state estimate. A reliability is determined for each one of the plurality of sub-models. A supervisory model receives the sub-model wear state estimates and the reliability for each one of the sub-models as inputs. The supervisory model generates a combined wear state estimate for the tire.

### Brief Description of the Drawings

The invention will be described by way of example and with reference to the accompanying drawings, in which:
Figure 1 is a perspective view of a vehicle and sensor-equipped tire, partially in section, employed in association with the tire wear state estimation system of the present invention;
Figure 2 is a schematic plan view of the vehicle shown in Figure 1;
Figure 3 is a flow diagram showing aspects of sub-models of the tire wear state estimation system of the present invention;
Figure 4 is a schematic representation of a supervisory model of a first exemplary embodiment of the tire wear state estimation system of the present invention;
Figure 5 is a schematic representation of a supervisory model of a second exemplary embodiment of the tire wear state estimation system of the present invention; and
Figure 6 is a schematic perspective view of the vehicle shown in Figure 1 with a representation of data transmission to a cloud-based server and a display device.

Similar numerals refer to similar parts throughout the drawings.

### Definitions

"Axial" and "axially" means lines or directions that are parallel to the axis of rotation of the tire.

"CAN" is an abbreviation for controller area network.

"Circumferential" means lines or directions extending along the perimeter of the surface of the annular tread perpendicular to the axial direction.

"Equatorial centerplane (CP)" means the plane perpendicular to the tire's axis of rotation and passing through the center of the tread.

"Footprint" means the contact patch or area of contact created by the tire tread with a flat surface as the tire rotates or rolls.

"GPS" is an abbreviation for global positioning system.

"Inboard side" means the side of the tire nearest the vehicle when the tire is mounted on a wheel and the wheel is mounted on the vehicle.

"Lateral" means an axial direction.

"Net contact area" means the total area of ground contacting tread elements between the lateral edges around the entire circumference of the tread divided by the gross area of the entire tread between the lateral edges.

"Outboard side" means the side of the tire farthest away from the vehicle when the tire is mounted on a wheel and the wheel is mounted on the vehicle.

"Radial" and "radially" means directions radially toward or away from the axis of rotation of the tire.

"TPMS" is an abbreviation for tire pressure monitoring system.

"Tread element" or "traction element" means a rib or a block element defined by a shape having adjacent grooves.

### Detailed Description of Example Embodiments of the Invention

The present invention provides a system and method that provides an indirect estimation of tire wear state using a supervisory model which determines a comprehensive tire wear state from tire wear state estimates generated by different sub-models.

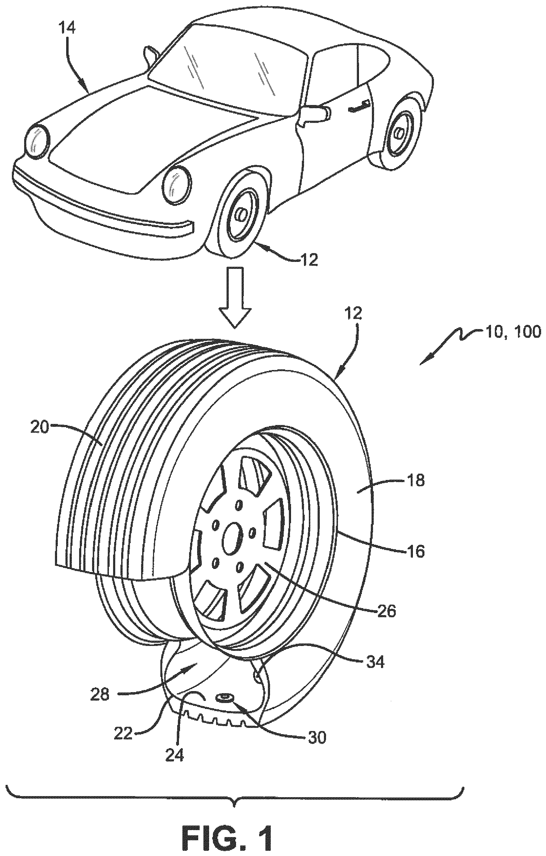

A first exemplary embodiment of the of the tire wear state estimation system 10 and method of the present invention is shown in Figures 1 through 4 and 6. With particular reference to Figure 1, the system 10 estimates the tire wear state for each tire 12 supporting a vehicle 14. While the vehicle 14 is depicted as a passenger car, the invention is not to be so restricted. The principles of the invention find application in other vehicle categories such as commercial trucks, off-the-road vehicles, and the like, in which vehicles may be supported by more or fewer tires. In addition, the invention finds application in a single vehicle 14 or in fleets of vehicles.

Each tire 12 includes a pair of bead areas 16 (only one shown) and a bead core (not shown) embedded in each bead area. Each one of a pair of sidewalls 18 (only one shown) extends radially outward from a respective bead area 16 to a ground-contacting tread 20. The tire 12 is reinforced by a carcass 22 that toroidally extends from one bead area 16 to the other bead area, as known to those skilled in the art. An innerliner 24 is formed on the inside surface of the carcass 22. The tire 12 is mounted on a wheel 26 in a manner known to those skilled in the art and, when mounted, forms an internal cavity 28 that is filled with a pressurized fluid, such as air.

A sensor unit 30 may be attached to the innerliner 24 of each tire 12 by means such as an adhesive and measures certain parameters or conditions of the tire, as will be described in greater detail below. It is to be understood that the sensor unit 30 may be attached in such a manner, or to other components of the tire 12, such as between layers of the carcass 22, on or in one of the sidewalls 18, on or in the tread 20, and/or a combination thereof. For the purpose of convenience, reference herein shall be made to mounting of the sensor unit 30 on the tire 12, with the understanding that mounting includes all such attachment.

The sensor unit 30 is mounted on each tire 12 for the purpose of detecting certain real-time tire parameters inside the tire, such as tire pressure and temperature. Preferably the sensor unit 30 is a tire pressure monitoring system (TPMS) module or sensor, of a type that is commercially available, and may be of any known configuration. For the purpose of convenience, the sensor unit 30 shall be referred to as a TPMS sensor. Each TPMS sensor 30 preferably also includes electronic memory capacity for storing identification (ID) information for each tire 12, known as tire ID information. Alternatively, tire ID information may be included in another sensor unit, or in a separate tire ID storage medium, such as a tire ID tag 34.

The tire ID information may include manufacturing information for the tire 12, such as: the tire type; tire model; size information, such as rim size, width, and outer diameter; manufacturing location; manufacturing date; a tread cap code that includes or correlates to a compound identification; and a mold code that includes or correlates to a tread structure identification. The tire ID information may also include a service history or other information to identify specific features and parameters of each tire 12, as well as mechanical characteristics of the tire, such as cornering parameters, spring rate, load-inflation relationship, and the like. Such tire identification enables correlation of the measured tire parameters and the specific tire 12 to provide local or central tracking of the tire, its current condition, and/or its condition over time. In addition, global positioning system (GPS) capability may be included in the TPMS sensor 30 and/or the tire ID tag 34 to provide location tracking of the tire 12 during transport and/or location tracking of the vehicle 14 on which the tire is installed.

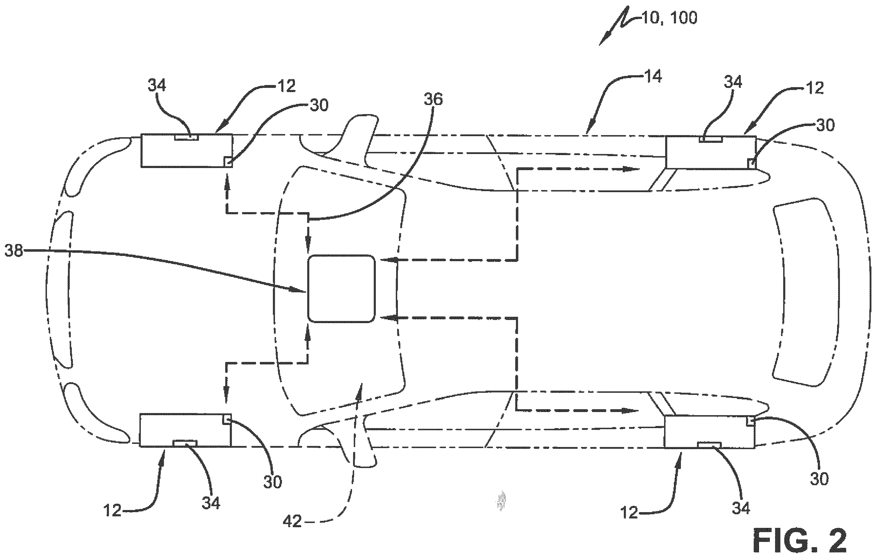

Turning now to Figure 2, the TMPS sensor 30 and the tire ID tag 34 each include an antenna for wireless transmission 36 of the measured tire temperature, as well as tire ID data, to a processor 38. The processor 38 may be mounted on the vehicle 14 as shown, or may be integrated into the TPMS sensor 30. For the purpose of convenience, the processor 38 will be described as being mounted on the vehicle 14, with the understanding that the processor may alternatively be integrated into the TPMS sensor 30. Preferably, the processor 38 is in electronic communication with or integrated into an electronic system of the vehicle 14, such as the vehicle CAN bus system 42, which is referred to as the CAN bus.

Aspects of the tire wear state estimation system 10 preferably are executed on the processor 38 or another processor that is accessible through the vehicle CAN bus 42, which enables input of data from the TMPS sensor 30 and the tire ID tag 34, as well as input of data from other sensors that are in electronic communication with the CAN bus. In this manner, the tire wear state estimation system 10 enables measurement of tire temperature and pressure with the TPMS sensor 30, which preferably is transmitted to the processor 38. Tire ID information preferably is transmitted from the tire ID tag 34 to the processor 38. The processor 38 preferably correlates the measured tire temperature, measured tire pressure, the measurement time, and ID information for each tire 12.

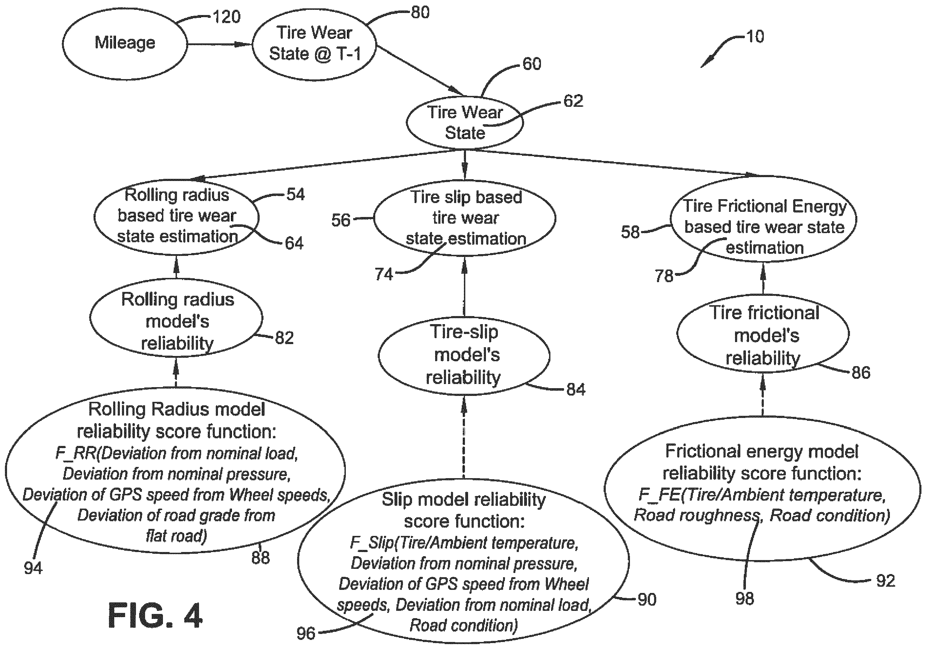

Turning to Figure 4, the first exemplary embodiment of the tire wear state estimation system 10 ad method includes a supervisory model 60. The supervisory model 60 infers the reliability of multiple sub-models or estimators with reliability score functions that calculate a reliability score of each sub-model based on external or physical parameters. The inferred reliability of each sub-model is combined with the individual estimates of the tire wear state from each sub-model, to generate a single combined wear state estimate 62. A preferred supervisory model 60 is a Bayesian Network, which is a probabilistic graphical model that represents a set of variables and their conditional dependencies through a directed acyclic graph. Of course, other types of prediction models may be used for the supervisory model 60.

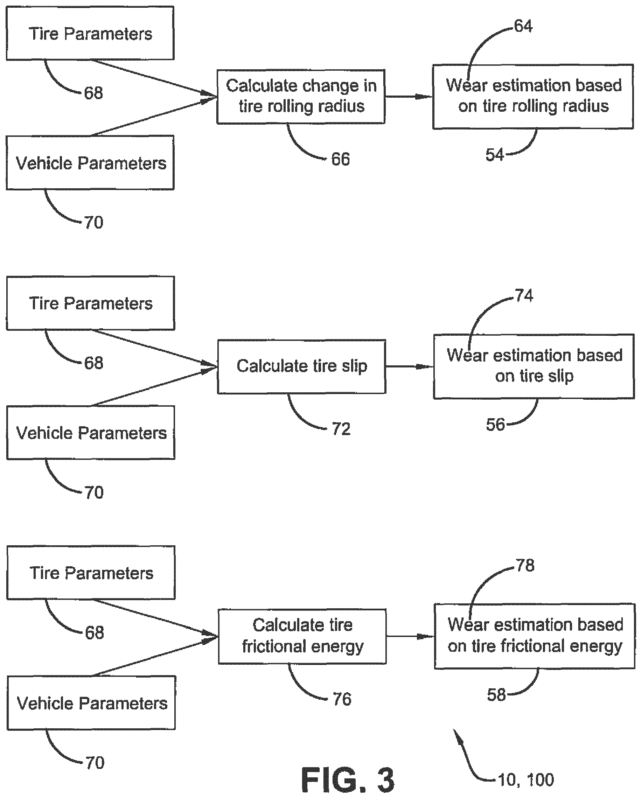

The sub-models or estimators analyzed by the supervisory model 60 include a rolling radius based wear state estimator 54, a slip based wear state estimator 56 and a frictional energy-based wear state estimator 58. Referring to Figure 3, an exemplary rolling radius based wear state estimator 54 includes a rolling radius calculator 66 that calculates a change in the radius of the tire 12 to generate a rolling radius wear estimate 64. Other sub-models that may be analyzed by the supervisory model 60 include: a vibration based wear state estimator; a cornering stiffness based wear state estimator; a braking stiffness based wear state estimator; a footprint length based wear state estimator; and a tire wear state estimator based on analysis of parameter combinations such as tire mileage, weather, and tire construction.

In the rolling radius based wear state estimator 54, tire parameters 68 obtained from the TPMS sensor 30, such as pressure, temperature and ID, are input into the rolling radius calculator 66. In addition, vehicle parameters 70 are measured by sensors that are mounted on the vehicle 14, and which are in electronic communication with the vehicle CAN bus system 42 (Figure 2). Specifically, vehicle parameters 70, such as wheel speed, vehicle speed, acceleration and/or position are obtained and input into the rolling radius calculator 66.

The rolling radius calculator 66 calculates a change in the radius of the tire 12 based on the tire parameters 68 and the vehicle parameters 70, which is used by the rolling radius based wear state estimator 54 to generate the rolling radius wear estimate 64. An exemplary technique for determining the rolling radius wear estimate 64 is described in U.S. Patent Nos. 9,663,115; 9,878,721; and 9,719,886.

An exemplary slip based wear state estimator 56 includes a tire slip calculator 72 that calculates slip of the tire 12 to generate a slip based wear state estimate 74. In the slip based wear state estimator 56, tire parameters 68 obtained from the TPMS sensor 30, such as pressure, temperature and ID, are input into the tire slip calculator 72. In addition, vehicle parameters 70, such as wheel speed, vehicle speed, and/or acceleration are obtained and input into the tire slip calculator 72.

The slip calculator 72 calculates slip of the tire 12 based on the tire parameters 68 and the vehicle parameters 70, which is used by the slip based wear state estimator 56 to generate the slip based wear state estimate 74. Exemplary techniques for determining the slip based wear state estimate 74 are described in U.S. Patent Nos. 9,610,810; 9,821,611; and 10,603,962.

An exemplary a frictional energy based wear state estimator 58 includes a tire frictional energy calculator 76 that calculates frictional energy of the tire 12 to generate a frictional energy based wear estimate 78. In the frictional energy based wear state estimator 58, tire parameters 68 obtained from the TPMS sensor 30, such as pressure, temperature and ID, are input into the frictional energy calculator 76. In addition, vehicle parameters 70, such as vehicle inertia and/or location are obtained and input into the frictional energy calculator 76.

The frictional energy calculator 76 calculates frictional energy of the tire 12 based on the tire parameters 68 and the vehicle parameters 70, which is used by the frictional energy based wear state estimator 58 to generate the frictional energy based wear estimate 78. An exemplary technique for determining the frictional energy based wear estimate 78 is described in U.S. Patent No. 9,873,293.

As described above, other sub-models that may be analyzed by the supervisory model 60. Exemplary techniques for determining a vibration based wear state estimate are described in U.S. Patent Nos. 9,259,976 and 9,050,864, as well as U.S. Patent Application Publication Nos. 2018/0154707 and 2020/0182746.

An exemplary technique for determining a cornering stiffness based wear state estimate is described in U.S. Patent No. 9,428,013.

An exemplary technique for determining a braking stiffness based wear state estimate is described in U.S. Patent No. 9,442,045.

Exemplary techniques for determining a footprint length based wear state estimator are described in U.S. Patent Application Serial Nos. 62/893,862; 62/893,852; and 62/893,860.

An exemplary technique for determining a tire wear state estimate based on analysis of parameter combinations such as tire mileage, weather, and tire construction is described in U.S. Patent Application Publication No. 2018/0272813.

Returning to Figure 4, the tire wear state estimation system 10 calculates the reliabilities of the sub-models or estimators and inputs them into the supervisory model 60 to generate the combined wear state estimate 62. Reference herein is made by way of example to the rolling radius based wear state estimator 54, the slip based wear state estimator 56 and the frictional energy based wear state estimator 58. More particularly, a respective model reliability score 82, 84 and 86 is determined for each of the rolling radius based wear state estimator 54, the slip based wear state estimator 56 and the frictional energy based wear state estimator 58 based on external and physical parameters to which each estimator is sensitive, referred to as sensitivity parameters.

For example, the rolling radius model reliability score 82 is determined using a rolling radius reliability score function 88. Rolling radius sensitivity parameters 94 are factors that are unaccounted for in the rolling radius based wear state estimator 54 and are known to affect the reliability of the rolling radius wear estimate 64. The sensitivity parameters 94 include: the loading state of the vehicle 14, namely, the deviation of the current vehicle load from a nominal vehicle loading state; extreme high or low tire inflation pressure conditions, namely, the deviation of the tire inflation pressure from a nominal inflation pressure range; the road grade state, namely, the deviation of the grade of the road on which the vehicle is traveling from a flat road condition; and GPS status, namely, the deviation of the vehicle speed indicated by the vehicle GPS from non-driven wheel speeds. These sensitivity parameters 94 are input into the rolling radius reliability score function 88, which scores the parameters with a statistical modeling technique, such as a regression technique, a machine learning model, and/or a fuzzy logic technique or function, to generate the rolling radius model reliability score 82.

The slip based model reliability score 84 is determined using a slip based reliability score function 90. Slip based sensitivity parameters 96 are factors that are unaccounted for in the slip based wear state estimator 56 and are known to affect the reliability of the slip based wear state estimate 74. The sensitivity parameters 96 include: the loading state of the vehicle 14, namely, the deviation of the current vehicle load from a nominal vehicle loading state; extreme high or low tire inflation pressure conditions, namely, the deviation of the tire inflation pressure from a nominal inflation pressure range; GPS status, namely, the deviation of the vehicle speed indicated by the vehicle GPS from non-driven wheel speeds; the ambient temperature of the tire 12; and the road surface condition, namely, the surface characteristics of the road on which the vehicle is traveling as indicated by a frictional coefficient. These sensitivity parameters 96 are input into the slip based reliability score function 90, which scores the parameters with a statistical modeling technique, such as a regression technique, a machine learning model, and/or a fuzzy logic technique or function, to generate the slip based model reliability score 84.

The frictional energy based model reliability score 86 is determined using a frictional energy based reliability score function 92. Frictional energy based sensitivity parameters 98 are factors that are unaccounted for in the frictional energy based wear state estimator 58 and are known to affect the reliability of the frictional energy based wear estimate 78. The sensitivity parameters 98 include: the ambient temperature of the tire 12; the road surface condition, namely, the surface characteristics of the road on which the vehicle 14 is traveling as indicated by a frictional coefficient; and the road roughness condition, namely, the roughness of the road on which the vehicle is traveling as indicated by an international roughness index (IRI). These sensitivity parameters 98 are input into the frictional energy based reliability score function 92, which scores the parameters with a statistical modeling technique, such as a regression technique, a machine learning model, and/or a fuzzy logic technique or function, to generate the frictional energy based model reliability score 86.

The rolling radius wear estimate 64 generated by the rolling radius based wear state estimator 54 and the rolling radius model's reliability score 82 are input into the supervisory model 60. The slip based wear estimate 74 generated by the slip based wear state estimator 56 and the slip based model's reliability score 84 are also input into the supervisory model 60. Additionally, the frictional energy based wear estimate 78 generated by the frictional energy based wear state estimator 58 and the frictional energy based model's reliability score 86 are input into the supervisory model 60.

The tire wear state estimation system 10 preferably also includes an estimate of tire wear state at a previous time step 80, which may be referred to as the tire wear state at T-1. Because the tire 12 continues to wear as time progresses, the estimate of tire wear state at the previous time step 80 improves the current estimate of tire wear state 62. Thus, the estimate of tire wear state at the previous time step 80 preferably is also input into the supervisory model 60. When the estimate of tire wear state at the previous time step 80 is not available, a mileage 120 of the vehicle 14 may be input into the supervisory model 120 to enable an estimate of the tire wear state at a previous time step to be obtained.

The supervisory model 60 thus receives the rolling radius model's wear estimate 64, the rolling radius model's reliability score 82, the slip based model's wear estimate 74, the slip based model's reliability score 84, the frictional energy based model's wear estimate 78, the frictional energy based model's reliability score 86 and the estimate of tire wear state at the previous time step 80 as inputs. The supervisory model 60 then executes a statistical inference to determine a probability distribution over the tire wear states, indicating the single most likely combined wear estimate 62. When a Bayesian Network is employed as the supervisory model 60, the wear estimate 62 is generated by performing a Bayesian inference.

In this manner, the first embodiment of the tire wear state estimation system 10 of the present invention provides an accurate and reliable estimate of tire wear state 62 using a supervisory model 60. The supervisory model determines the comprehensive wear state 62 from estimates generated by multiple sub-models 54, 56 and 58.

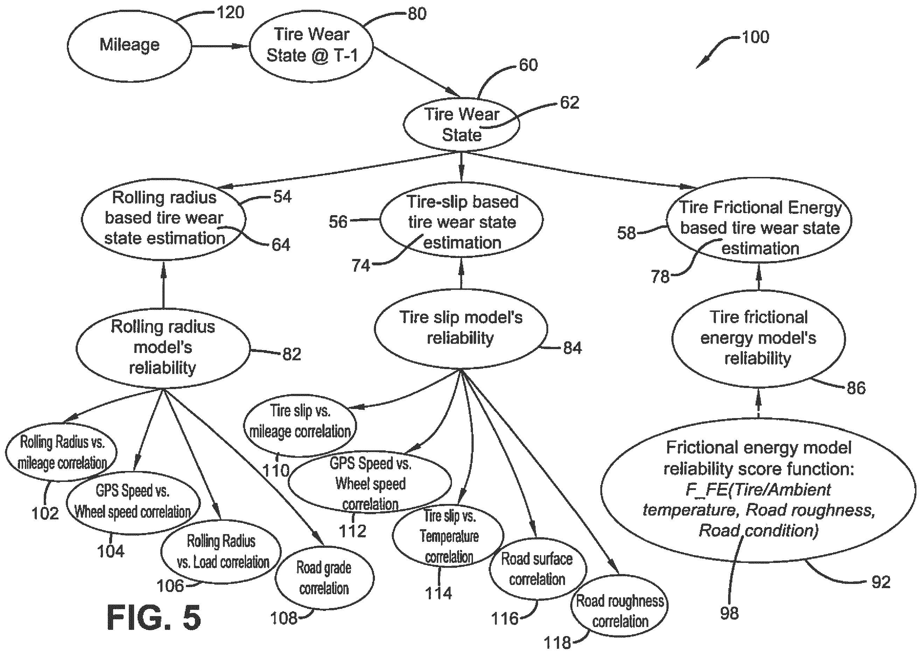

Referring now to Figures 1 through 3 and 5 through 6, a second exemplary embodiment of the of the tire wear state estimation system of the present invention is indicated at 100. The second embodiment of the tire wear state estimation system 100 is similar in structure and operation to the first embodiment of the tire wear state estimation system 10, with the exception that the rolling radius model reliability score 82 and the slip based model reliability score 84 are determined differently in the second embodiment of the tire wear state estimation system. Therefore, only the differences between the second embodiment of the tire wear state estimation system 100 and the first embodiment of the tire wear state estimation system 10 will be described.

In the second embodiment of the tire wear estimation system 100, the rolling radius model's reliability 82 is inferred using multiple correlations. For example, a first rolling radius correlation 102 includes correlating the rolling radius of the tire 12 to the mileage of the vehicle 14. A second rolling radius correlation 104 includes correlating the global positioning system (GPS) speed to the wheel speeds of the vehicle 14. A third rolling radius correlation 106 includes correlating the rolling radius of the tire 12 to the vehicle load. A fourth rolling radius correlation 108 is related to the grade of the road on which the vehicle 14 is travelling. These correlations 102, 104, 106 and 108 are used by the supervisory model to infer the reliability 82 of the rolling radius model. When a Bayesian Network is employed as the supervisory model 60, the reliability 82 is inferred by performing a Bayesian inference.

The slip based model's reliability 84 is also inferred using multiple correlations. A first slip based correlation 110 includes a correlation between the slip of the tire 12 and the mileage of the vehicle 14. A second slip based correlation 112 includes a correlation between the global positioning system (GPS) speed to the wheel speeds of the vehicle 14. A third slip based correlation 114 includes correlating the slip of the tire 12 to the temperature of the tire. A fourth slip based correlation 116 is related to the surface characteristics of the road on which the vehicle 14 is travelling. A fifth correlation 118 is related to the roughness of the road on which the vehicle 14 is traveling. These correlations 110, 112, 114, 116 and 118 are used by the supervisory model to infer the reliability 84 of the slip based model. When a Bayesian Network is employed as the supervisory model 60, the reliability 84 is inferred by performing a Bayesian inference.

As with the first embodiment of the tire wear state estimation system 10, in the second embodiment of the tire wear state estimation system 100, the supervisory model 60 receives the rolling radius model's wear estimate 64, the rolling radius model's reliability 82, the slip based model's wear state estimate 74, the slip based model's reliability 84, the frictional energy based model's wear estimate 78, the frictional energy based model's reliability score 86 and the estimate of tire wear state at the previous time step 80 as inputs. The supervisory model 60 then executes a statistical inference to determine a probability distribution over the tire wear states, this helps indicate the single most likely combined wear estimate 62. When a Bayesian Network is employed as the supervisory model 60, the wear estimate 62 is generated by performing a Bayesian inference.

In this manner, the second embodiment of the tire wear state estimation system 100 of the present invention provides an accurate and reliable estimate of tire wear state 62 using a supervisory model 60. The supervisory model 60 determines the comprehensive wear state 62 from estimates generated by multiple sub-models 54, 56 and 58.

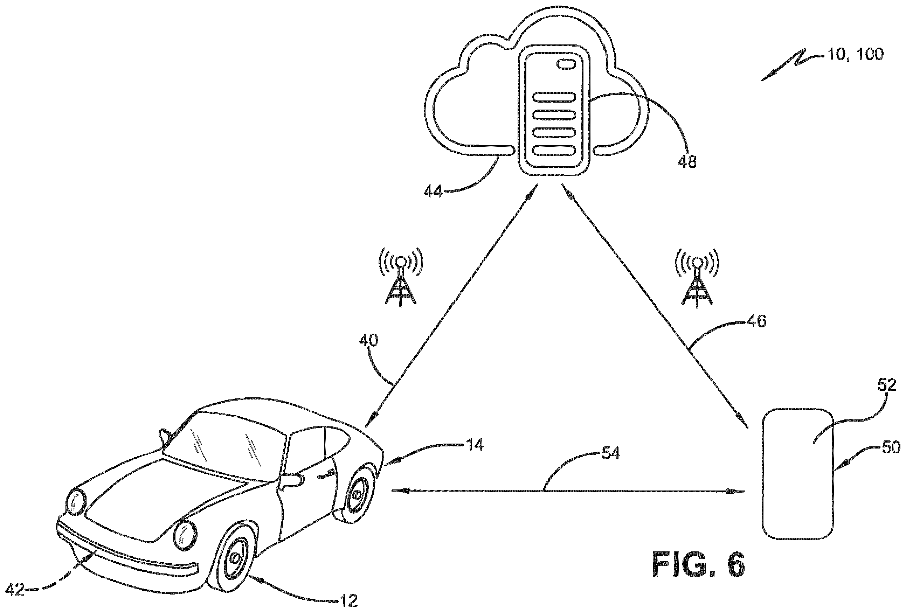

As shown in Figure 6, tire parameters 68 for each tire 12 vehicle parameters 70 for the vehicle 14 may be wirelessly transmitted 40 from the processor 38 and/or the CAN-bus 42 on the vehicle to a remote processor 48, such as a processor in a cloud-based server 44. The cloud-based server 44 may execute aspects of the tire wear state estimation system 10, 100. The tire wear state estimate 62 may be wirelessly transmitted 46 to a device 50, such as a fleet management server or a vehicle operator device, which includes a display 52 for showing the estimated wear state to a fleet manager or to an operator of the vehicle 14.

The present invention also includes a method of estimating the wear state 62 of a tire 12. The method includes steps in accordance with the description that is presented above and shown in Figures 1 through 6.

## Claims

1. A tire wear state estimation system comprising:
at least one tire (12) supporting a vehicle (14);
a sensor (30) mounted on the at least one tire (12), the tire mounted sensor (30) measuring tire parameters (68); and
at least one sensor mounted on the vehicle (14), the at least one vehicle mounted sensor measuring vehicle parameters (70);
**characterized in that** the system further comprises
a plurality of sub-models, wherein each sub-model receives selected tire parameters (68) from the tire mounted sensor (30) and selected vehicle parameters (70) from the at least one vehicle mounted sensor;
a plurality of sub-model wear state estimates, each one of the sub-model wear state estimates being generated by a respective one of the plurality of sub-models;
a model reliability being determined for each one of the plurality of sub-models; and
a supervisory model (60), the supervisory model (60) receiving as inputs the plurality of sub-model wear state estimates and the model reliability for each one of the plurality of sub-models, wherein the supervisory model generates a combined wear state estimate (62) for the at least one tire (12).

2. The tire wear state estimation system of claim 1, wherein the supervisory model (60) executes a Bayesian inference to determine a probability distribution over the plurality of sub-models in generating the combined wear state estimate (62).

3. The tire wear state estimation system of claim 1 or 2, wherein one sub-model of the plurality of sub-models includes a rolling radius based wear state estimator (54), and, optionally, wherein the rolling radius based wear state estimator (54) includes a rolling radius calculator (66) and the rolling radius calculator (66) receives the selected tire parameters (68) and the selected vehicle parameters (70) to calculate a change in a radius of the at least one tire (12).

4. The tire wear state estimation system of claim 3, wherein a model reliability for the rolling radius based wear state estimator (54) includes a rolling radius reliability score function (88) that scores rolling radius sensitivity parameters to generate the model reliability score (82) for the rolling radius based wear state estimator (54), and, optionally, wherein the rolling radius sensitivity parameters include at least one of a loading state of the vehicle (14), inflation pressure conditions, a road grade state, and a global positioning system status.

5. The tire wear state estimation system of claim 4, wherein the model reliability for the rolling radius based wear state estimator (54) is generated by inferring a plurality of correlations, and, optionally, wherein the plurality of correlations includes at least one of a correlation of a rolling radius of the at least one tire (12) to a mileage of the vehicle (14), a correlation of a global positioning system speed to a wheel speed of the vehicle (14), a correlation between a rolling radius of the at least one tire to a vehicle load, and a correlation of a grade of a road on which the vehicle (14) travels.

6. The tire wear state estimation system of at least one of the previous claims, wherein one sub-model of the plurality of sub-models includes a slip based wear state estimator (56).

7. The tire wear state estimation system of claim 6, wherein (i) the slip based wear state estimator (56) includes a tire slip calculator (72), and the tire slip calculator (72) receives the selected tire parameters (68) and the selected vehicle parameters (70) to calculate the slip of the at least one tire (12); and/or wherein (ii) a model reliability for the slip based wear state estimator (56) is calculated through a slip based reliability score function (84) that scores slip based sensitivity parameters.

8. The tire wear state estimation system of claim 7, wherein the features of section (ii) of claim 7 are present and the slip based sensitivity parameters include at least one of a loading state of the vehicle, inflation pressure conditions, a global positioning system status, an ambient temperature of the at least one tire (12), and a road surface condition.

9. The tire wear state estimation system of at least one of the previous claims 7 or 8, wherein the features of section (ii) of claim 7 are present and the model reliability for the slip based wear state estimator (56) is inferred through a plurality of correlations, and, optionally, wherein the plurality of correlations includes at least one of a correlation between a slip of the at least one tire (12) and a mileage of the vehicle (14), a correlation between a global positioning system speed to wheel speeds of the vehicle (14), a correlation of a slip of the at least one tire (12) to a temperature of the at least one tire (12), a correlation of surface characteristics of a road on which the vehicle travels, and a correlation of a roughness of a road on which the vehicle travels.

10. The tire wear state estimation system of at least one of the previous claims, wherein one sub-model of the plurality of sub-models includes a frictional energy based wear state estimator (58), and, optionally, wherein the frictional energy based wear state estimator (58) includes a frictional energy calculator (76) and the frictional energy calculator (76) receives the selected tire parameters (68) and the selected vehicle parameters (70) to calculate a frictional energy of the at least one tire (12).

11. The tire wear state estimation system of claim 10, wherein a model reliability for the frictional energy based wear state estimator (58) includes a frictional energy based reliability score function (92) that scores frictional energy based sensitivity parameters to generate the model reliability score for the frictional energy based wear state estimator (58), and, optionally, wherein the frictional energy based sensitivity parameters include at least one of an ambient temperature of the at least one tire (12), a road surface condition, and a road roughness condition.

12. The tire wear state estimation system of at least one of the previous claims, wherein the plurality of sub-models includes at least one of a vibration based wear state estimator, a cornering stiffness based wear state estimator, a braking stiffness based wear state estimator, a footprint length based wear state estimator, and a tire wear state estimator based on analysis of parameter combinations including at least one of tire mileage, weather, and tire construction.

13. The tire wear state estimation system of at least one of the previous claims, further comprising an estimate of a wear state of the at least one tire (12) at a previous time step being received as an input into the supervisory model.

14. A tire wear state estimation method, the method comprising:
providing at least one tire (12) supporting a vehicle (14);
providing a sensor (30) mounted on the at least one tire (12), the tire mounted sensor (30) measuring tire parameters (68);
providing at least one sensor mounted on the vehicle (14), the at least one vehicle mounted sensor measuring vehicle parameters (70); and
providing a plurality of sub-models, wherein each sub-model receives selected tire parameters from the tire mounted sensor and selected vehicle parameters from the at least one vehicle mounted sensor;
**characterized in that** the method further comprises
a plurality of sub-model wear state estimates, wherein each one of the sub-model wear state estimates is generated by a respective one of the plurality of sub-models;
a model reliability that is determined for each one of the plurality of sub-models; and
providing a supervisory model (60), wherein the supervisory model (60) receives as inputs the plurality of sub-model wear state estimates and the model reliability for each one of the plurality of sub-models, and wherein the supervisory model (60) generates a combined wear state estimate (62) for the at least one tire (12).

15. The tire wear state estimation method of claim 14, wherein the method comprises using or operating the tire wear state estimation system (10) of at least one of the claims 1 to 13.

## Patentansprüche

1. System zur Schätzung eines Reifenverschleißzustands, das umfasst:
mindestens einen Reifen (12), der ein Fahrzeug (14) trägt;
einen Sensor (30), der auf dem mindestens einen Reifen (12) montiert ist, wobei der auf dem Reifen montierte Sensor (30) Parameter (68) des Reifens misst, und
mindestens einen auf dem Fahrzeug (14) montierten Sensor, wobei der mindestens eine auf dem Fahrzeug montierte Sensor Parameter (70) des Fahrzeugs misst;
**dadurch gekennzeichnet, dass** das System ferner umfasst
eine Mehrzahl von Untermodellen, wobei jedes Untermodell ausgewählte Parameter (68) des Reifens vom dem auf dem Reifen montierten Sensor (30) und ausgewählte Parameter (70) des Fahrzeugs vom dem zumindest einen auf dem Fahrzeug montierten Sensor empfängt;
eine Mehrzahl von Untermodell-Verschleißzustandsschätzungen, wobei jede der Untermodell-Verschleißzustandsschätzungen von jeweils einem der mehreren Untermodelle erzeugt wird;
eine Modellzuverlässigkeit, die für jedes der mehreren Untermodelle bestimmt wird, und
ein Aufsichtsmodell (60), wobei das Aufsichtsmodell (60) als Eingänge die Mehrzahl von Untermodell-Verschleißzustandsschätzungen und die Modellzuverlässigkeit fürjedes der mehreren Untermodelle empfängt, wobei das Aufsichtsmodell eine kombinierte Verschleißzustandsschätzung (62) für den mindestens einen Reifen (12) erzeugt.

2. System zur Schätzung eines Reifenverschleißzustands nach Anspruch 1, wobei das Aufsichtsmodell (60) eine Bayessche Inferenz ausführt, um eine Wahrscheinlichkeitsverteilung über die Mehrzahl von Untermodellen bei der Erzeugung der kombinierten Verschleißzustandsschätzung (62) zu bestimmen.

3. System zur Schätzung eines Reifenverschleißzustands nach Anspruch 1 oder 2, wobei ein Untermodell der Mehrzahl von Untermodellen einen auf dem Rollradius basierten Verschleißzustandsschätzer (54) umfasst, und, optional, wobei der auf dem Rollradius basierte Verschleißzustandsschätzer (54) einen Rechner (66) des Rollradius umfasst und der Rechner (66) des Rollradius die ausgewählten Parameter des Reifens (68) und die ausgewählten Parameter des Fahrzeugs (70) empfängt, um eine Änderung in einem Radius des mindestens einen Reifens (12) zu berechnen.

4. System zur Schätzung eines Reifenverschleißzustands nach Anspruch 3, wobei eine Modellzuverlässigkeit für den auf dem Rollradius basierten Verschleißzustandsschätzer (54) eine Zuverlässigkeitsbewertungsfunktion (88) des Rollradius umfasst, die Parameter der Empfindlichkeit des Rollradius bewertet, um den Modellzuverlässigkeitswert (82) für den auf dem Rollradius basierten Verschleißzustandsschätzer (54) zu generieren, und, optional, wobei die Parameter der Empfindlichkeit des Rollradius mindestens eines von dem Ladezustand des Fahrzeugs (14), den Inflationsdruckbedingungen, einem Straßenzustand und einem globalen Positionierungsstatus umfassen.

5. System zur Schätzung eines Reifenverschleißzustands nach Anspruch 4, wobei die Modellzuverlässigkeit für den auf dem Rollradius basierten Verschleißzustandsschätzer (54) durch Ableiten mehrerer Korrelationen erzeugt wird, und, optional, wobei die Mehrzahl von Korrelationen mindestens einer von einer Korrelation eines Rollradius des mindestens einen Reifens (12) mit einer Laufleistung des Fahrzeugs (14), einer Korrelation einer globalen Positionssystemgeschwindigkeit mit einer Radgeschwindigkeit des Fahrzeugs (14), einer Korrelation zwischen einem Rollradius des mindestens einen Reifens und einer Fahrzeuglast, und einer Korrelation eines Grades einer Straße, auf der sich das Fahrzeug (14) bewegt, umfasst.

6. System zur Schätzung eines Reifenverschleißzustands von mindestens einem der vorhergehenden Ansprüche, wobei ein Untermodell der Mehrzahl von Untermodellen einen auf dem Rutsch basierten Verschleißzustandsschätzer (56) umfasst.

7. System zur Schätzung eines Reifenverschleißzustands nach Anspruch 6, wobei (i) der auf dem Rutsch basierte Verschleißzustandsschätzer (56) einen Rechner (72) des Reifenrutsches umfasst und der Rechner (72) des Reifenrutsches die ausgewählten Parameter des Reifens (68) und die ausgewählten Parameter des Fahrzeugs (70) zur Berechnung des Rutschens des mindestens einen Reifens (12) empfängt und/oder wobei (ii) eine Modellzuverlässigkeit für den auf dem Rutsch basierten Verschleißzustandsschätzer (56) durch eine auf dem Rutsch basierte Zuverlässigkeitsbewertungsfunktion (84) berechnet wird, die auf dem Rutsch basierte Parameter der Empfindlichkeit bewertet.

8. System zur Schätzung eines Reifenverschleißzustands nach Anspruch 7, wobei die Merkmale des Abschnitts (ii) nach Anspruch 7 vorhanden sind und die auf dem Rutsch basierten Parameter der Empfindlichkeit mindestens eines von einem Ladezustand des Fahrzeugs, den Inflationsdruckbedingungen, einem globalen Positionierungsstatus, einer Umgebungstemperatur des mindestens einen Reifens (12) und einer Straßenoberflächenbeschaffenheit, umfassen.

9. System zur Schätzung eines Reifenverschleißzustands nach mindestens einem der vorhergehenden Ansprüche 7 oder 8, wobei die Merkmale des Abschnitts (ii) nach Anspruch 7 vorhanden sind und die Modellzuverlässigkeit für den auf dem Rutschbasierten Verschleißzustandsschätzer (56) durch eine Mehrzahl von Korrelationen abgeleitet wird und, optional, wobei die Mehrzahl von Korrelationen mindestens eine von einer Korrelation zwischen einem Rutschens des mindestens einen Reifens (12) und einer Laufleistung des Fahrzeugs (14), einer Korrelation zwischen einer globalen Positioniersystemgeschwindigkeit und den Radgeschwindigkeiten des Fahrzeugs (14), einer Korrelation eines Rutschens des mindestens einen Reifens (12) mit einer Temperatur des mindestens einen Reifens (12), einer Korrelation der Oberflächeneigenschaften einer Straße, auf der das Fahrzeug fährt und einer Korrelation einer Rauigkeit einer Straße, auf der das Fahrzeug fährt, umfasst.

10. System zur Schätzung eines Reifenverschleißzustands nach mindestens einem der vorhergehenden Ansprüche, wobei ein Untermodell der Mehrzahl von Untermodellen einen auf der Reibungsenergie basierten Verschleißzustandsschätzer (58) umfasst und, optional, wobei der auf der Reibungsenergie basierte Verschleißzustandsschätzer (58) einen Reibungsenergierechner (76) umfasst, und der Reibungsenergierechner (76) die ausgewählten Parameter des Reifens (68) und die ausgewählten Parameter des Fahrzeugs (70) zur Berechnung einer Reibungsenergie des mindestens einen Reifens (12) empfängt.

11. System zur Schätzung eines Reifenverschleißzustands nach Anspruch 10, wobei eine Modellzuverlässigkeit für den auf der Reibungsenergie basierten Verschleißzustandsschätzer (58) eine auf der Reibungsenergie basierte Zuverlässigkeitsbewertungsfunktion (92) umfasst, die auf der Reibungsenergie basierte Parameter der Empfindlichkeit bewertet, um den Modellzuverlässigkeitswert für den auf der Reibungsenergie basierten Verschleißzustandsschätzer zu generieren (58), und, optional, wobei die auf der Reibungsenergie basierten Parameter der Empfindlichkeit mindestens eines von einer Umgebungstemperatur des mindestens einen Reifens (12), einer Straßenoberflächenbeschaffenheit und einer Straßenrauigkeitsbedingung umfassen.

12. System zur Schätzung eines Reifenverschleißzustands nach mindestens einem der vorhergehenden Ansprüche, wobei die Mehrzahl von Untermodellen mindestens eines von einem auf den Vibrationen basierten Verschleißzustandsschätzer, einem auf der Quersteifigkeit basierten Verschleißzustandsschätzer, einem auf der Bremssteifigkeit basierten Verschleißzustandsschätzer, einem auf der Laufflächenlänge basierten Verschleißzustandsschätzer und einem auf der Analyse von Parameterkombinationen basierten Verschleißzustandsschätzer, die mindestens eines von der Reifenlaufleistung, dem Wetter und der Reifenkonstruktion umfassen, umfassen.

13. System zur Schätzung eines Reifenverschleißzustands nach mindestens einem der vorhergehenden Ansprüche, das ferner eine Schätzung eines Verschleißzustands des mindestens einen Reifens (12) zu einem früheren Zeitpunkt umfasst, der als Eingabe in dem Überwachungsmodell empfangen wird.

14. Verfahren zur Schätzung eines Reifenverschleißzustands, wobei das Verfahren umfasst:
das Bereitstellen mindestens eines Reifens (12), der ein Fahrzeug (14) trägt,
das Bereitstellen eines Sensors (30), der auf dem mindestens einen Reifen (12) montiert ist, wobei der auf einem Reifen (12) montierte Sensor (30) Parameter des Reifens (68) misst;
das Bereitstellen mindestens eines auf dem Fahrzeug (14) montierten Sensors, wobei der mindestens eine auf dem Fahrzeug montierte Sensor Parameter des Fahrzeugs (70) misst, und
das Bereitstellen einer Mehrzahl von Untermodellen, wobei jedes Untermodell ausgewählte Parameter des Reifens von dem auf dem Reifen montierten Sensor und ausgewählte Parameter des Fahrzeugs von dem mindestens einen auf dem Fahrzeug montierten Sensor empfängt;
**dadurch gekennzeichnet, dass** das Verfahren ferner umfasst:
eine Mehrzahl von Untermodell-Verschleißzustandsschätzungen, wobei jede der Untermodell-Verschleißzustandsschätzungen von jeweils einem der mehreren Untermodelle erzeugt wird;
eine Modellzuverlässigkeit, die für jedes der mehreren Untermodelle bestimmt wird, und
das Bereitstellen eines Überwachungsmodells (60), wobei das Überwachungsmodell (60) als Eingänge die Mehrzahl von Untermodell-Verschleißzustandsschätzungen und die Modellzuverlässigkeit für jeden der mehreren Untermodelle empfängt, und wobei das Überwachungsmodell (60) eine kombinierte Verschleißzustandsschätzung (62) für den mindestens einen Reifen (12) erzeugt.

15. Reifenverschleißzustandsschätzverfahren nach Anspruch 14, wobei das Verfahren die Verwendung oder den Betrieb des Systems zur Schätzung eines Reifenverschleißzustands (10) mindestens eines der Ansprüche 1 bis 13 umfasst.

## Revendications

1. Système d'estimation de l'état d'usure d'un bandage pneumatique, qui comprend :
au moins un bandage pneumatique (12) qui supporte un véhicule (14) ;
un capteur (30) monté sur ledit au moins un bandage pneumatique (12), le capteur (30) monté sur le bandage pneumatique mesurant des paramètres (68) du bandage pneumatique ; et
au moins un capteur monté sur le véhicule (14), ledit au moins un capteur monté sur le véhicule mesurant des paramètres (70) du véhicule ;
**caractérisé en ce que** le système comprend en outre
un certain nombre de modèles secondaires ; dans lequel chaque modèle secondaire reçoit des paramètres (68) du bandage pneumatique qui ont été sélectionnés, à partir du capteur (30) monté sur le bandage pneumatique et des paramètres (70) du véhicule qui ont été sélectionnés, à partir dudit au moins un capteur monté sur le véhicule ;
un certain nombre d'estimations de l'état d'usure de modèles secondaires, chacune desdites estimations de l'état d'usure de modèles secondaires étant générée par un modèle secondaire respectif parmi lesdits plusieurs modèles secondaires ;
une fiabilité de modèle qui est déterminée pour chacun desdits plusieurs modèles secondaires ; et
un modèle de supervision (60), le modèle de supervision (60) recevant à titre d'entrées lesdites plusieurs estimations de l'état d'usure de modèles secondaires et la fiabilité de modèle pour chacun desdits plusieurs modèles secondaires ; dans lequel le modèle de supervision génère une estimation combinée de l'état d'usure (62) pour ledit au moins un bandage pneumatique (12).

2. Système d'estimation de l'état d'usure d'un bandage pneumatique selon la revendication 1, dans lequel le modèle de supervision (60) met en oeuvre une inférence bayésienne afin de déterminer une distribution de probabilités qui recouvrent lesdits plusieurs modèles secondaires en générant l'estimation combinée de l'état d'usure (62).

3. Système d'estimation de l'état d'usure d'un bandage pneumatique selon la revendication 1, dans lequel un modèle secondaire parmi lesdits plusieurs modèles secondaires englobe un dispositif d'estimation de l'état d'usure (54) en se basant sur le rayon de roulement et, de manière facultative, dans lequel le dispositif d'estimation de l'état d'usure (54) en se basant sur le rayon de roulement englobe un calculateur du rayon de roulement (66) et le calculateur du rayon de roulement (66) reçoit les paramètres (68) du bandage pneumatique qui ont été sélectionnés et les paramètres (70) du véhicule qui ont été sélectionnés afin de calculer un changement en ce qui concerne un rayon dudit au moins un bandage pneumatique (12).

4. Système d'estimation de l'état d'usure d'un bandage pneumatique selon la revendication 3, dans lequel une fiabilité de modèle pour le dispositif d'estimation de l'état d'usure (54) en se basant sur le rayon de roulement englobe une fonction de score de fiabilité (88) du rayon de roulement qui établit un score des paramètres de sensibilité du rayon de roulement afin de générer le score de fiabilité de modèle (82) pour le dispositif d'estimation de l'état d'usure (54) qui se base sur le rayon de roulement, et de manière facultative, dans lequel les paramètres de sensibilité du rayon de roulement englobent au moins un paramètre choisi parmi un état de charge du véhicule (14), des conditions de pression de gonflage, un état de dégradation de la route et un état d'un système mondial de localisation.

5. Système d'estimation de l'état d'usure d'un bandage pneumatique selon la revendication 4, dans lequel on génère la fiabilité de modèle pour le dispositif d'estimation de l'état d'usure (54) en se basant sur le rayon de roulement en inférant un certain nombre de corrélations, et de manière facultative, dans lequel lesdites plusieurs corrélations englobent au moins une corrélation choisie parmi une corrélation d'un rayon de roulement dudit au moins un bandage pneumatique à un kilométrage de véhicule (14), une corrélation d'une vitesse indiquée par un système mondial de localisation à une vitesse de roue du véhicule (14), une corrélation entre un rayon de roulement dudit au moins un bandage pneumatique à une charge du véhicule, et une corrélation d'une dégradation d'une route sur laquelle le véhicule (14 se déplace.

6. Système d'estimation de l'état d'usure d'un bandage pneumatique selon au moins une des revendications précédentes, dans lequel un modèle secondaire desdits plusieurs modèles secondaires englobe un dispositif d'estimation (56) de l'état d'usure en se basant sur le patinage.

7. Système d'estimation de l'état d'usure d'un bandage pneumatique selon la revendication 4, dans lequel (i) le dispositif d'estimation (56) de l'état d'usure en se basant sur le patinage englobe un calculateur (72) du patinage du bandage pneumatique et le calculateur (72) du patinage du bandage pneumatique reçoit les paramètres (68) du bandage pneumatique qui ont été sélectionnés et les paramètres (70) du véhicule qui ont été sélectionnés afin de calculer le patinage dudit au moins un bandage pneumatique (12) ; et/ou dans lequel (ii) une fiabilité de modèle pour le dispositif d'estimation (56) de l'état d'usure en se basant sur le patinage est calculé par l'intermédiaire d'une fonction du score de fiabilité (84) qui se base sur le patinage, qui attribue un score des paramètres de sensibilité qui se base sur le patinage.

8. Système d'estimation de l'état d'usure d'un bandage pneumatique selon la revendication 7, dans lequel les caractéristiques de la section (ii) de la revendication 7 sont présentes et les paramètres de sensibilité qui se basent sur le patinage englobent au moins un paramètre choisi parmi l'état de charge du véhicule, les conditions de pression de gonflage, un état d'un système mondial de localisation, une température ambiante dudit au moins un bandage pneumatique (12), et une condition de la surface de la route.

9. Système d'estimation de l'état d'usure d'un bandage pneumatique selon au moins une des revendications précédentes 7 ou 8, dans lequel les caractéristiques de la section (ii) de la revendication 7 sont présentes et la fiabilité de modèle pour le dispositif d'estimation (56) de l'état d'usure en se basant sur le patinage sont inférées par l'intermédiaire de plusieurs corrélations, et de manière facultative, dans lequel lesdites plusieurs corrélations englobent au moins une corrélation entre un patinage dudit au moins un bandage pneumatique (12) et un kilométrage du véhicule (14), une corrélation entre une vitesse indiquée par un système mondial de localisation et des vitesses des roues du véhicule (14), une corrélation entre un patinage dudit au moins un bandage pneumatique (12) et une température dudit au moins un bandage pneumatique (12), une corrélation de caractéristiques de la surface d'une route sur laquelle se déplace le véhicule, et une corrélation d'une rugosité d'une route sur laquelle se déplace le véhicule.

10. Système d'estimation de l'état d'usure d'un bandage pneumatique selon au moins une des revendications précédentes, dans lequel un modèle secondaire desdits plusieurs modèles secondaires englobe un dispositif d'estimation (58) de l'état d'usure en se basant sur l'énergie de friction, et de manière facultative, le dispositif d'estimation (58) de l'état d'usure en se basant sur l'énergie de friction englobe un calculateur de l'énergie de friction (76) et le calculateur de l'énergie de friction (76) reçoit les paramètres (68) du bandage pneumatique qui ont été sélectionnés et les paramètres (70) du véhicule qui ont été sélectionnés afin de calculer une énergie de friction dudit au moins un bandage pneumatique (12).

11. Système d'estimation de l'état d'usure d'un bandage pneumatique selon au moins une des revendications précédentes, dans lequel un modèle de fiabilité pour le dispositif d'estimation (58) de l'état d'usure en se basant sur l'énergie de friction englobe une fonction de score de fiabilité (92) qui se basent sur l'énergie de friction, et un score des paramètres de sensibilité qui se base sur l'énergie de friction afin de générer le score de fiabilité du modèle pour le dispositif d'estimation (58) de l'état d'usure en se basant sur l'énergie de friction, et dans lequel, de manière facultative, les paramètres de sensibilité qui se base sur l'énergie de friction englobent au moins un paramètre choisi parmi une température ambiante dudit au moins un bandage pneumatique (12, une condition de surface de la route et une condition de rugosité de la route.

12. Système d'estimation de l'état d'usure d'un bandage pneumatique selon au moins une des revendications précédentes, dans lequel lesdits plusieurs modèles secondaires englobent un dispositif d'estimation de l'état d'usure en se basant sur les vibrations, un dispositif d'estimation de l'état d'usure en se basant sur la résistance au virage, un dispositif d'estimation de l'état d'usure en se basant sur la rigidité au freinage, un dispositif d'estimation de l'état d'usure en se basant sur la longueur de l'empreinte et un dispositif d'estimation de l'état d'usure d'un bandage pneumatique en se basant sur une analyse de combinaisons de paramètres qui englobent au moins un paramètre choisi parmi le kilométrage du bandage pneumatique, les conditions météorologiques et une structure de la route.

13. Système d'estimation de l'état d'usure d'un bandage pneumatique selon au moins une des revendications précédentes, qui comprend en outre une estimation d'un état d'usure dudit au moins un bandage pneumatique (12) lors d'une étape précédente dans le temps, reçue à titre d'une entrée dans le modèle de supervision.

14. Procédé d'estimation de l'état d'usure d'un bandage pneumatique, le procédé comprenant le fait de :
procurer au moins un bandage pneumatique (12) qui supporte un véhicule (14) ;
procurer un capteur (30) monté sur ledit au moins un bandage pneumatique (12), le capteur (30) monté sur un bandage pneumatique mesurant des paramètres (68) du bandage pneumatique ;
procurer au moins un capteur monté sur le véhicule, ledit au moins un capteur monté sur le véhicule mesurant des paramètres (70) du véhicule ; et
procurer un certain nombre de modèles secondaires ; dans lequel chaque modèle secondaire reçoit des paramètres (68) du bandage pneumatique qui ont été sélectionnés, à partir du capteur (30) monté sur le bandage pneumatique et des paramètres (70) du véhicule qui ont été sélectionnés, à partir dudit au moins un capteur monté sur le véhicule ;
**caractérisé en ce que** le procédé comprend en outre :
un certain nombre d'estimations de l'état d'usure de modèles secondaires, dans lequel chacune desdites estimations de l'état d'usure de modèles secondaires est générée par un modèle secondaire respectif parmi lesdits plusieurs modèles secondaires ;
une fiabilité de modèle qui est déterminée pour chacun desdits plusieurs modèles secondaires ; et
la procuration d'un modèle de supervision (60), dans lequel le modèle de supervision (60) reçoit à titre d'entrées lesdites plusieurs estimations de l'état d'usure de modèles secondaires et la fiabilité de modèle pour chacun desdits plusieurs modèles secondaires ; dans lequel le modèle de supervision génère une estimation combinée de l'état d'usure (62) pour ledit au moins un bandage pneumatique (12).

15. Procédé d'estimation de l'état d'usure d'un bandage pneumatique selon la revendication 14, dans lequel le procédé comprend l'utilisation ou la mise en oeuvre du système (10) d'estimation de l'état d'usure d'un bandage pneumatique selon au moins une des revendications 1 à 13.
